# EUROPEAN PATENT SPECIFICATION

(11) **EP 4 453 088 B1**
(45) Date of publication and mention of the grant of the patent: **30.09.2026**
(21) Application number: 22835356.1
(22) Date of filing: 12.12.2022
(51) Int. Cl.: C08L 23/12

(54) **SOFT POLYOLEFIN COMPOSITION**
WEICHPOLYOLEFINZUSAMMENSETZUNG
COMPOSITION DE POLYOLÉFINE SOUPLE

(30) Priority: 23.12.2021 EP 21217233
(43) Date of publication of application: 30.10.2024
(73) Proprietor: Basell Poliolefine Italia S.r.l., 20121 Milano (IT)
(72) Inventor: GRAZZI, Michele, 44122 Ferrara (IT); GALVAN, Monica, 44122 Ferrara (IT)
(74) Representative: LyondellBasell
(86) International application number: PCT/EP2022/085289
(87) International publication number: WO 2023/117512

(56) References cited:
- EP-A1- 2 501 756
- EP-A1- 2 588 521
- EP-A1- 3 058 028

## Description

### FIELD OF THE INVENTION

The present disclosure relates to soft thermoplastic polyolefin compositions having improved balance of mechanical properties. The soft thermoplastic polyolefin compositions can be shaped into films or sheets, which find preferential use as geomembranes or in roofing applications.

### BACKGROUND OF THE INVENTION

Both elastomers and thermoplastic polyolefins are largely used in the art to produce articles in which flexibility and softness are key, such as sheets and membranes for use as geomembranes or for roofing applications.

Traditionally, polyvinyl chloride (PVC) and other chlorinated TPOs were used to prepare heat-weldable thermoplastic roofing sheets. However, PVC requires plasticizers to have the flexibility needed for roofing applications. The aging of membranes through plasticizers loss and the presence of chlorine in the polymer chains were the drivers for the substitution of PVC with chlorine-free thermoplastic polyolefins having the required mechanical properties in absence of plasticizers.

Also thermoplastic polyolefins are used to prepare sheets or membranes for roofing applications, being highly flexible, easily heat-weldable and recyclable.

WO03/076509 discloses a polyolefin composition for roofing applications having good tenacity, the composition comprising: (A) 15-40 wt.% of a crystalline copolymer of propylene and (B) 60-85 wt.% of an elastomeric fraction comprising a copolymer of propylene with ethylene and a copolymer of ethylene with alpha-olefins.

The flexibility and strain resistance of thermoplastic polyolefins can be improved by blending the thermoplastic polyolefin with poly(1-butene) as described in the patent application WO98/54251.

The processability of heterophasic polyolefin compositions having low melt flow rate can be improved without adversely affecting their mechanical properties by adding poly(1-butene) and a paraffinic wax or grease, as described in the patent application WO2009/024435.

As evidenced by WO98/54251 and WO2009/024435, the addition of poly(1-butene) to an heterophasic polyolefin composition generally results in a reduction of the elongation at break and in a slight decrease in softness. EP 2 501 756 A1, EP 2 588 521 A1 and EP 3 058 028 A1 also refer to the technical field.

In this context, there is still the need of polyolefin compositions with an improved balance of physical and mechanical properties, particularly in terms of elongation and stress at break, the composition retaining high softness and good processability.

### SUMMARY OF THE INVENTION

The present disclosure provides a polyolefin composition comprising:
(I) 75-95% by weight of an thermoplastic polyolefin comprising:
   (A) 18-30% by weight of a copolymer of propylene with from 1.0 to 6.0% by weight, based on the weight of (A), of at least one comonomer of formula CH₂=CHR, where R is H or a linear or branched C2-C8 alkyl, wherein the melt flow rate (MFR(A)) of the copolymer, measured according to ISO 1133 (230°C, 2.16 kg), ranges from 30 to 60 g/10min; and
   (B) 70-82% by weight of a copolymer of propylene with from 20 to 35% by weight, based on the weight of (B), of at least one comonomer of formula CH₂=CHR, and optionally a diene, where R is H or a linear or branched C2-C8 alkyl,
   wherein the thermoplastic polyolefin
   i) comprises an amount of fraction soluble in xylene at 25°C (XS(I)) equal to or greater than 70% by weight, based on the total weight of (A)+(B);
   ii) has melt flow rate (MFR(I)), measured according to ISO 1133 (230°C, 2.16 kg) from 0.2 to 15.0 g/10 min,
      and wherein the amounts of (A) and (B) are based on the total weight of (A)+(B); and
(II) 5-25% by weight of a polybutene component having flexural modulus equal to or lower than 60 MPa, measured according to the method ISO 178:2019, and comprising a copolymer of butene-1 with ethylene and optionally at least one comonomer of formula CH₂=CHR¹, where R¹ is methyl or a linear or branched C3-C8 alkyl, wherein the copolymer of butene-1
   iii) comprises at least 80% by weight of units deriving from butene-1, based on the weight of (II);
   iv) has molecular weight distribution Mw/Mn equal to or lower than 3;
   and wherein the amounts of (I) and (II) are based on the total weight of (I)+(II).

The present disclosure also provides a shaped article comprising a polyolefin composition comprising:
(I) 75-95% by weight of an thermoplastic polyolefin comprising:
   (A) 18-30% by weight of a copolymer of propylene with from 1.0 to 6.0% by weight, based on the weight of (A), of at least one comonomer of formula CH₂=CHR, where R is H or a linear or branched C2-C8 alkyl, wherein the melt flow rate (MFR(A)) of the copolymer, measured according to ISO 1133 (230°C, 2.16 kg), ranges from 30 to 60 g/10min; and
   (B) 70-82% by weight of a copolymer of propylene with from 20 to 35% by weight, based on the weight of (B), of at least one comonomer of formula CH₂=CHR, and optionally a diene, where R is H or a linear or branched C2-C8 alkyl,
   wherein the thermoplastic polyolefin
   i) comprises an amount of fraction soluble in xylene at 25°C (XS(I)) equal to or greater than 70% by weight, based on the total weight of (A)+(B);
   ii) has melt flow rate (MFR(I)), measured according to ISO 1133 (230°C, 2.16 kg) from 0.2 to 15.0 g/10 min,
   and wherein the amounts of (A) and (B) are based on the total weight of (A)+(B); and
(II) 5-25% by weight of a polybutene component having flexural modulus equal to or lower than 60 MPa, measured according to the method ISO 178:2019, and comprising a copolymer of butene-1 with ethylene and optionally at least one comonomer formula CH₂=CHR¹, where R¹ is methyl or a linear or branched C3-C8 alkyl, wherein the copolymer of butene-1
   iii) comprises at least 80% by weight of units deriving from butene-1, based on the weight of (II);
   iv) has molecular weight distribution Mw/Mn equal to or lower than 3;
   and wherein the amounts of (I) and (II) are based on the total weight of (I)+(II).

The polyolefin composition of the present disclosure shows an improved balance of elongation at break and stress at break, in combination with improved softness.

The sheets or films comprising the polyolefin composition of the present disclosure are soft and flexible and roofing membranes obtained therefrom are easy to install.

While multiple embodiments are disclosed, still other embodiments will become apparent to those skilled in the art from the following detailed description.

### DETAILED DESCRIPTION OF THE INVENTION

In the context of the present disclosure;
- the percentages are expressed by weight, unless otherwise specified. The total weight of a composition sums up to 100%, unless otherwise specified;
- when referred to polymers, the term "blend" refers to reactor-made blends, i.e. blends of at least two polymeric components obtained directly from a polymerization process, to mechanical blends, i.e. blends obtained by melt-mixing at least two distinct polymeric components, and to combinations of the two;
- when the term "comprising" is referred to a polymer or to a polymer composition, mixture or blend, it should be construed to mean "comprising or consisting essentially of";
- the term "consisting essentially of" means that, in addition to those components which are mandatory, other components may also be present in a polymer or in a polymer composition, mixture or blend, provided that the essential characteristics of the polymer or of the composition, mixture or blend are not materially affected by their presence. Examples of components that, when present in customary amounts, do not materially affect the characteristics of a polymer or of a polyolefin composition, mixture or blend are catalyst residues, antistatic agents, melt stabilizers, light stabilizers, antioxidants and antiacids;
- a "film" is thin-layered material having thickness lower than 5000 µm; and
- a "sheet" is a layer of material having thickness equal to or greater than 5000 µm.

In a preferred embodiment, the polyolefin composition comprises from 80 to 90% by weight, preferably from 80 to less than 90% by weight, more preferably from 82 to 88% by weight, of the thermoplastic polyolefin (I) and from 10 to 20% by weight, preferably from more than 10 to 20% by weight, more preferably 12 to 18% by weight, of the polybutene component (II), wherein the amounts of (I) and (II) are based on the total weight of (I)+(II).

In a preferred embodiment, the polyolefin composition has at least one, preferably all, the following properties:
- melt flow rate (MFR(tot)) measured according to ISO 1133 (230°C, 2.16 kg) ranging from 0.2 to 5.0 g/10 min; and/or
- the mean value of the elongation at break in machine direction (MD) and in transverse direction (TD) equal to or greater than 700%, preferably ranging from 700 to 900%, determined according to the method ISO 527-3 (Specimens type: 5, Crosshead speed: 500 mm/min) on 1mm-thick extruded specimens; and/or
- the mean value of the tensile stress at break in machine direction (MD) and in transverse direction (TD) equal to or greater than 15 MPa, preferably ranging from 15 MPa to 18 MPa, determined according to the method ISO 527-3 (Specimens type: 5, Crosshead speed: 500 mm/min) on 1mm-thick extruded specimens; and/or
- Shore A value equal to or lower than 83, measured according to the method ISO 868 (15 sec) on 1mm-thick extruded specimens; and/or
- Shore D value equal to or lower than 25, measured according to the method ISO 868 (15 sec) on 1mm-thick extruded specimens.

In the following the individual components of the polyolefin composition are defined in more detail. The different preferred embodiments of said components can be comprised in the polyolefin composition in any combination.

In a preferred embodiment, the thermoplastic polyolefin (I) comprises 20-30% by weight of component (A) and 70-80% by weight of component (B), wherein the amounts of (A) and (B) are based on the total weight of (A)+(B).

In a preferred embodiment, the comonomer CH₂=CHR comprised in component (A) and (B) of the thermoplastic polyolefin (I) is independently selected from the group consisting of ethylene, butene-1, hexene-1, 4-methy-pentene-1, octene-1 and combinations thereof. In a further preferred embodiment, the comonomer is ethylene.

In a preferred embodiment, the thermoplastic polyolefin (I) comprises an amount of fraction soluble in xylene at 25°C (XS(I)) ranging from 70 to 90% by weight, preferably from 70 to 80% by weight, based on the weight of the thermoplastic polyolefin (I).

In a preferred embodiment, the fraction soluble in xylene at 25°C of the thermoplastic polyolefin (I) has intrinsic viscosity XSIV(I) ranging from 2.5 to 4.5 dl/g, preferably from 3.0 to 3.9 dl/g.

In a preferred embodiment, the thermoplastic polyolefin (I) has melt flow rate MFR(I), measured according to ISO 1133 (230°C, 2.16 kg) ranging from 0.2 to 5.0 g/10 min, preferably from 0.3 to 1.5 g/10 min., more preferably from 0.4 to 1.0 g/10 min.

In a preferred embodiment, the value of the melt flow rate MFR(I) is obtained directly from polymerization.

In a preferred embodiment, the value of the melt flow rate MFR(I) is not obtained by degrading (visbreaking) the thermoplastic polyolefin (I) obtained from the polymerization reaction.

In a preferred embodiment, the component (A) is a copolymer of propylene comprising from 2.0 to 4.0% by weight, preferably from 3.0 to 3.9% by weight, of the at least one comonomer, more preferably of ethylene.

In a preferred embodiment, the propylene copolymer (A) has melt flow rate MFR(A), measured according to ISO 1133 (230°C, 2.16 kg) ranging from 35 to 50 g/10 min., preferably from 40 to 50 g/10 min., more preferably from 42 to 48 g/10 min.

In a preferred embodiment, the propylene copolymer (A) comprises a fraction soluble in xylene at 25°C XS(A) equal to or lower than 9.0% by weight, preferably ranging from 4.0 to 9.0% by weight, more preferably from 6.0 to 8.0% by weight, wherein the amount of XS(A) is based on the weight of the copolymer (A).

In a preferred embodiment, the propylene copolymer (B) comprises a fraction soluble in xylene at 25°C XS(B) equal to or greater than 80% by weight, preferably equal to or greater than 85% by weight, more preferably equal to or greater than 90% by weight, wherein the amount of XS(B) is based on the weight of the copolymer (B).

In an embodiment, the upper limit of the fraction of component (B) soluble in xylene at 25°C XS(B) is 97% by weight for each lower limit, based on the weight of the copolymer (B).

In some embodiments, the component (B) comprises a first copolymer (B1) and a second copolymer (B2) of propylene with at least one comonomer of formula CH₂=CHR, and optionally a diene, where R is H or a linear or branched C2-C8 alkyl, provided that the total amount of comonomer comprised in the propylene copolymer (B) is 20-35% by weight, wherein the total amount of comonomer is based on the weight of component (B).

In a preferred embodiment, the component (B) comprises:
(B1) 30-60% by weight, preferably 40-55% by weight of a first copolymer of propylene with at least one comonomer of formula CH₂=CHR, and optionally a diene, where R is H or a linear or branched C2-C8 alkyl, and wherein the first propylene copolymer comprises 20-40% by weight, preferably 25-35% by weight of units deriving from the comonomer and a fraction soluble in xylene at 25°C XS(B1) equal to or greater than 80% by weight, preferably equal to or greater than 85% by weight, more preferably equal to or greater than 90% by weigh,
   wherein the amount of comonomer and of XS(B1) are based on the weight of component (B1); and
(B2) 40-70% by weight, preferably 45-60% by weight of a second copolymer of propylene with at least one comonomer of formula CH₂=CHR, and optionally a diene, where R is H or a linear or branched C2-C8 alkyl, and wherein the second propylene copolymer comprises 25-45% by weight, preferably 30-43% by weight of comonomer and a fraction soluble in xylene at 25°C (XSB2) equal to or greater than 80% by weight, preferably equal to or greater than 85% by weight, more preferably equal to or greater than 90% by weigh,

wherein the amount of comonomer and of XS(B2) are based on the weight of component (B2),
and wherein the amounts of (B1) and (B2) are based on the total weight of the component (B).

Components (B1) and (B2) are preferably different, like they have a different comonomer content.

In an embodiment, the upper limit of the fraction of component (B1) soluble in xylene at 25°C XS(B1) and/or of the fraction of component (B2) soluble in xylene at 25°C XS(B2), preferably both, is 97% by weight for each lower limit, wherein the amounts of XS(B1) and XS(B2) are based on the weight of component (B1) and (B2) respectively.

The propylene copolymer (B) optionally comprises recurring units derived from a diene, the diene being preferably selected from the group consisting of butadiene, 1,4-hexadiene, 1,5-hexadiene, ethylidene-1-norbonene and combinations thereof.

The total amount of recurring units deriving from a diene comprised in the propylene copolymer (B) ranges from 1 to 10% by weight, with respect to the weight of component (B).

In one preferred embodiment, the thermoplastic polyolefin (I) comprises:
(A) 18-30% by weight, preferably 20-30% by weight, of a copolymer of propylene with ethylene,
   - comprising from 1.0 to 6.0% by weight, preferably from 2.0 to 4.0% by weight, more preferably from 3.0 to 3.9% by weight, of ethylene, based on the weight of (A), and
   - having melt flow rate MFR(A) measured according to ISO 1133 (230°C, 2.16kg) ranging from 30 to 60 g/10 min., preferably from 35 to 50 g/10 min., more preferably from 40 to 50 g/10 min., still more preferably from 42 to 48 g/10min; and
(B) 70-82% by weight, preferably 70-80% by weight, of a copolymer of propylene with ethylene comprising 20-35% by weight of ethylene, the amount of ethylene being based on the weight of (B),

wherein the thermoplastic polyolefin
   i) comprises an amount of fraction soluble in xylene at 25°C XS(I) equal to or greater than 70% by weight, preferably ranging from 70 to 90% by weight, more preferably from 70 to 80% by weight, the fraction soluble in xylene at 25°C XS(I) having intrinsic viscosity XSIV(I) ranging from 2.5 to 4.5 dl/g, preferably from 3.0 to 3.9 dl/g;
   ii) has melt flow rate MFR(I) measured according to ISO 1133, 230°C, 2.16kg from 0.2 to 2.0 g/10min., preferably from 0.3 to 1.5 g/10min., more preferably from 0.4 to 1.0 g/10min., the melt flow rate being preferably obtained directly from polymerization; and
and wherein the amounts of (A), (B) and of the fraction soluble in xylene at 25°C XS(I) are based on the total weight of (A)+(B).

The thermoplastic polyolefin (I) preferably has at least one, preferably all, the following properties:
- flexural modulus ranging from 40 to 90 MPa, preferably from 50 to 80 MPa, more preferably from 50 to 70 MPa, wherein the flexural modulus is measured according to ISO 178:2019 on injection molded specimens; and/or
- tensile modulus in MD and/or TD, preferably in MD and TD, determined according to the method ISO 527-3 (specimens type 2, Crosshead speed: 1 mm/min) on 1mm-thick extruded specimens, comprised in the range 30-70 MPa; and/or
- stress at break in MD and/or TD, preferably in MD and TD, determined according to the method ISO 527-3 (Specimens type: 5, Crosshead speed: 500 mm/min) on 1mm-thick extruded specimens, comprised in the range 10.0-20.0 MPa, preferably 13.0-18.0 MPa;
- elongation at break in MD and/or TD, preferably in MD and TD, determined according to the method ISO 527-3 (Specimens type: 5, Crosshead speed: 500 mm/min) on 1mm-thick extruded specimens, comprised in the range 600-800%; and/or
- tear resistance in MD and/or TD, preferably in MD and TD, determined according to the method ASTM D 1004 (Crosshead speed: 51 mm/min; V-shaped die cut specimen) on 1mm-thick extruded specimens, comprised in the range 40-70 g, preferably 40-60 g; and/or
- shore A value, determined according to the method ISO 868 (15 sec) on 1mm-thick extruded specimens, comprised in the range 70-90; and/or
- shore D value equal to or lower than 30, measured on 1mm-thick extruded specimens according to method ISO 868 (15 sec). In one embodiment, the Shore D value is comprised in the range 23-30.

The thermoplastic polyolefin (I) is a mechanical blend or, preferably, a reactor blend of components (A) and (B). The reactor blend is prepared by a sequential polymerization process in at least two stages, wherein the second and each subsequent polymerization stage is carried out in the presence of the polymer produced and the catalyst used in the immediately preceding polymerization stage.

The polymerization processes to prepare the single components (A) and (B) or the sequential polymerization process to prepare the reactor blend of (A) and (B) are carried out in the presence of a catalyst selected from metallocene compounds, highly stereospecific Ziegler-Natta catalyst systems and combinations thereof.

In a preferred embodiment, the polymerization process to prepare the single components (A) and (B) or the sequential polymerization process are carried out in the presence of a highly stereospecific Ziegler-Natta catalyst system comprising:
(1) a solid catalyst component comprising a magnesium halide support on which a Ti compound having at least a Ti-halogen bond is present, and a stereoregulating internal donor;
(2) optionally, but preferably, an Al-containing cocatalyst; and
(3) optionally, but preferably, a further electron-donor compound (external donor).

In some preferred embodiments, the solid catalyst component (1) comprises a titanium compound of formula Ti(OR)ₙX_{y_n}, wherein n is comprised between 0 and y; y is the valence of titanium; X is halogen and R is a hydrocarbon group having 1-10 carbon atoms or a -COR group. Among them, particularly preferred are titanium compounds having at least one Ti-halogen bond such as titanium tetrahalides or titanium halogenalcoholates. Preferred specific titanium compounds are TiCl₃, TiCl₄, Ti(OBu)₄, Ti(OBu)Cl₃, Ti(OBu)₂Cl₂, Ti(OBu)₃Cl. TiCl₄ is particularly preferred.

In one embodiment, the solid catalyst component (1) comprises a titanium compound in an amount securing the presence of from 0.5 to 10% by weight of Ti with respect to the total weight of the solid catalyst component (1).

The solid catalyst component (1) comprises at least one stereoregulating internal donor selected from mono or bidentate organic Lewis bases, preferably selected from esters, ketones, amines, amides, carbamates, carbonates, ethers, nitriles, alkoxysilanes and combinations thereof.

Particularly preferred are the electron donors belonging to aliphatic or aromatic mono- or dicarboxylic acid esters and diethers.

Among alkyl and aryl esters of optionally substituted aromatic polycarboxylic acids, preferred donors are the esters of phthalic acids such as those described in EP 45977A2 and EP395083A2.

In some embodiments, the internal electron donor is selected from the group consisting of mono- or di-substituted phthalates, wherein the substituents are independently selected among linear or branched C₁₋₁₀ alkyl, C₃₋₈ cycloalkyl and aryl radical.

The internal electron donor is preferably selected among di-isobutyl phthalate, di-n-butyl phthalate, di-n-octyl phthalate, diphenyl phthalate, benzylbutyl phthalate and combinations thereof. In one embodiment, the internal electron donor is di-isobutyl phthalate.

Esters of aliphatic acids are preferably selected from malonic acids such as those described in WO98/056830, WO98/056833, WO98/056834, glutaric acids such as those disclosed in WO00/55215, and succinic acids such as those disclosed WO00/63261.

Particular type of diesters are those deriving from esterification of aliphatic or aromatic diols such as those described in WO2010/078494 and USP 7,388,061.

In some embodiments, the internal electron donor is selected from 1,3-diethers of formula 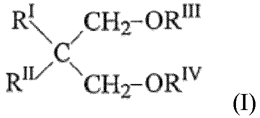 wherein R^{I} and R^{II} are independently selected from C₁₋₁₈ alkyl, C₃₋₁₈ ccycloalkyl and C⁷⁻¹⁸ aryl radicals, R^{III} and R^{IV} are independently selected from C₁₋₄ alkyl radicals; or the carbon atom in position 2 of the 1,3-diether belongs to a cyclic or polycyclic structure made up of from 5 to 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structures), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures, wherein one or more of the above mentioned alkyl, cycloalkyl, aryl, aralkyl, or alkaryl radicals and the condensed cyclic structures optionally contain one or more heteroatom(s) as substitutes for carbon and/or hydrogen atoms. Ethers of this type are described in EP361493, EP728769 and WO02/100904.

When 1,3-diethers described above are used, the external electron donor (3) can be absent.

In some cases, specific mixtures of internal donors, in particular between aliphatic or aromatic mono or dicarboxylic acid esters and 1,3-diethers as disclosed in WO07/57160 and WO2011/061134 can be used as internal donor.

Preferred magnesium halide support is magnesium dihalide.

In one embodiment, the amount of internal electron donor which remains fixed on the solid catalyst component (1) is 5 to 20% by moles, with respect to the magnesium dihalide.

Preferred methods for the preparation of the solid catalyst components start from Mg dihalide precursors that upon reaction with titanium chlorides converts the precursor into the Mg dihalide support. The reaction is preferably carried out in the presence of the steroregulating internal donor.

In a preferred embodiment the magnesium dihalide precursor is a Lewis adduct of formula MgCl₂•nR1OH, where n is a number between 0.1 and 6, and R1 is a hydrocarbon radical having 1-18 carbon atoms. Preferably, n ranges from 1 to 5 and more preferably from 1.5 to 4.5.

The adduct can be suitably prepared by mixing alcohol and magnesium chloride, operating under stirring conditions at the melting temperature of the adduct (100-130°C).

Then, the adduct is mixed with an inert hydrocarbon immiscible with the adduct thereby creating an emulsion which is quickly quenched causing the solidification of the adduct in the form of spherical particles.

The so obtained adduct can be directly reacted with the Ti compound or it can be previously subjected to thermal controlled dealcoholation (80-130°C) so as to obtain an adduct in which the number of moles of alcohol is generally lower than 3 preferably between 0.1 and 2.5. This controlled dealcoholation step may carried out in order to increase the morphological stability of the catalyst during polymerization and/or to increase the catalyst porosity as described in EP395083A2.

The reaction with the Ti compound can be carried out by suspending the optionally dealcoholated adduct in cold TiCl₄ (generally at 0°C). The mixture is heated up to 80-130°C and kept at this temperature for 0,5-2 hours. The treatment with TiCl₄ can be carried out one or more times. The stereoregulating internal donor can be added during the treatment with TiCl₄. The treatment with the internal donor can be repeated one or more times.

The preparation of catalyst components according to this general method is described for example in European Patent Applications US4,399,054, US4,469,648, WO98/44009A1 and as already mentioned, in EP395083A2.

In one embodiment, the catalyst component (1) is in the form of spherical particles having an average diameter ranging from 10 to 350 µm, a surface area ranging from 20 to 250 m²/g, preferably from 80 to 200 m²/g and porosity greater that 0.2 ml/g, preferably of from 0.25 to 0.5 ml/g, wherein the surface area and the porosity are measured by BET.

In some preferred embodiments, the catalyst system comprises an Al-containing cocatalyst (2) selected from Al-trialkyls, preferably selected from the group consisting of Al-tryethyl, Al-triisobutyl and Al-tri-n-butyl.

In one embodiment, the Al/Ti weight ratio in the catalyst system is from 1 to 1000, preferably from 20 to 800.

In a preferred embodiment, the catalyst system comprises a further electron donor compound (3) (external electron donor) selected among silicon compounds, ethers, esters, amines, heterocyclic compounds, particularly 2,2,6,6-tetramethylpiperidine, and ketones.

Preferably, the external donor is selected among silicon compounds of formula (R2)a(R3)bSi(OR4)c, where a and b are integers from 0 to 2, c is an integer from 1 to 4 and the sum (a+b+c) is 4; R2, R3, and R4, are alkyl, cycloalkyl or aryl radicals with 1-18 carbon atoms, optionally containing heteroatoms. Particularly preferred are the silicon compounds in which a is 1, b is 1, c is 2, at least one of R2 and R3 is selected from branched alkyl, cycloalkyl or aryl groups with 3-10 carbon atoms, optionally containing heteroatoms, and R4 is a C1-C10 alkyl group, in particular methyl.

Examples of such preferred silicon compounds are selected among methylcyclohexyldimethoxysilane (C-donor), diphenyldimethoxysilane, methyl-t-butyldimethoxysilane, dicyclopentyldimethoxysilane (D-donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane and combinations thereof.

The silicon compounds in which a is 0, c is 3, R3 is a branched alkyl or cycloalkyl group, optionally containing heteroatoms, and R4 is methyl are also preferred. Examples of such silicon compounds are cyclohexyltrimethoxysilane, t-butyltrimethoxysilane and hexyltrimethoxysilane.

Even if several combinations of the components of the catalyst system allow to obtain the polyolefin compositions of the present disclosure, a particularly suitable catalyst system comprises di-isobutyl phthalate as internal electron donor and dicyclopentyl dimethoxy silane (D-donor) as external electron donor (3).

In one embodiment, the catalyst system is pre-contacted with small quantities of monomer (prepolymerization), maintaining the catalyst in suspension in a hydrocarbon solvent, and polymerizing at temperatures from 25° to 60°C producing a quantity of polymer from about 0.5 to about 3 times the weight of the catalyst system.

In an alternative embodiment, the prepolymerization is carried out in liquid monomer, producing a quantity of polymer 1000 times the weight of the catalyst system.

Sequential polymerization processes for preparing the polyolefin compositions of the present disclosure are described in EP472946 and WO03/011962.

The components (A) and (B) can be produced in any one of the polymerization stages. Preferably in a first copolymerization stage (a) monomers are polymerized to form the propylene copolymer (A) and a second copolymerization stage (b) the relevant monomers are polymerized to form the propylene copolymer (B).

In one embodiment, the second copolymerization stage (b) comprises a copolymerization stage (b1) and a copolymerization stage (b2), wherein the comonomers are polymerized to form the propylene copolymer (B1) and the propylene copolymer (B2) in any given order.

The polymerization process, which can be continuous or batch, is carried out according to known cascade techniques operating either in mixed liquid phase/gas phase or totally in gas phase.

The liquid-phase polymerization is carried out either in slurry, solution or bulk (liquid monomer). This latter technology is the most preferred and can be carried out in various types of reactors such as continuous stirred tank reactors, loop reactors or plug-flow reactors.

The gas-phase polymerization can be carried out in gas-phase reactors, such as fluidized or stirred, fixed bed reactors.

In one embodiment, the copolymerization stage (a) is carried out in liquid phase using liquid propylene as diluent to form the propylene copolymer (A) and the copolymerization stage (b), or the copolymerization stages (b1) and (b2), are carried out in the gas phase to produce the propylene copolymer (B).

In a preferred embodiment, also the copolymerization stage (a) is carried out in the gas phase.

The reaction temperature of the polymerization stages (a) and (b) is independently selected from values comprised in the range from 40° to 90°C.

The polymerization pressure of a copolymerization stage carried out in liquid phase is from 3.3 to 4.3 MPa and the polymerization pressure of a copolymerization stage carried out in gas-phase is selected from values comprised in the range from 0.5 to 3.0 MPa.

The residence time of each polymerization stage depends upon the desired ratio of component (A) and (B). In one embodiment, the residence time in each polymerization stage ranges from 15 minutes to 8 hours.

When the polyolefin composition of the present disclosure is a reactor blend, the amounts of components (A) and (B) correspond to the split between the polymerization reactors.

The molecular weight of the propylene copolymers obtained in the polymerization stages is regulated using chain transfer agents, such as hydrogen or ZnEt₂.

Optionally but preferably, the thermoplastic polyolefin (I) comprises up to and including 3.0% by weight, for example from 0.01 to 3.0% by weight, of at least one additive (C) selected from the group consisting of antistatic agents, anti-oxidants, light stabilizers, slipping agents, anti-acids, melt stabilizers, and combinations thereof, wherein the amount of the additive (C) is based on the total weight of the thermoplastic polyolefin (I), the total weight being 100%.

In one embodiment, the thermoplastic polyolefin (I) consists of the components (A), (B) and (C).

Preferably, the polybutene component (II) has flexural modulus equal to or lower than 30 MPa, measured according to the method ISO 178:2019 on compression molded specimens.

In a preferred embodiment, the polybutene component (II) has at least one, preferably all, the following properties:
- shore A value equal to or lower than 90, preferably equal to or lower than 70, measured according to the method ISO 868 on compression molded specimens; and/or
- compression set equal to or lower than 50%, measured on compression molded specimens according to the method ASTM D395 at 23°C and 25% deformation.

In a preferred embodiment, the polybutene component (II) comprises a copolymer of butene-1 and ethylene comprising from 5 to 10% by weight of units deriving from ethylene, based on the weight of the polybutene component (II).

The copolymer of butene-1 preferably has no melting point (TmII) detectable using the DSC method described hereinafter and a melting enthalpy after 10 days of aging (ΔHf), determined according to the method described hereinafter, equal to or lower than 25 J/g, preferably from 4 to 20 J/g, more preferably from 4 to 15 J/g, more preferably from 5 to 10 J/g.

In a less preferred embodiment, the polybutene component (II) comprises a copolymer of butene-1, ethylene and propylene endowed the properties above.

The butene-1 copolymer is preferably obtained by contacting under polymerization conditions butene-1, ethylene and optionally a further comonomer, in the presence of a catalyst system obtainable by contacting:
(1) a stereorigid metallocene compound;
(2) an alumoxane or a compound capable of forming an alkyl metallocene cation; and, optionally but preferably,
(3) an organo aluminum compound.

The stereorigid metallocene compound (1) preferably belongs to the formula (I): 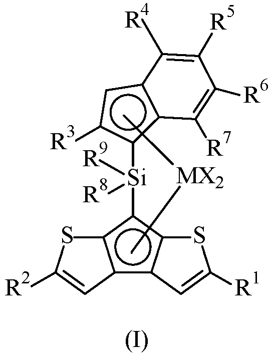 wherein:
M is an atom of a transition metal selected from those belonging to group 4, preferably M is zirconium;
X, equal to or different from each other, is a hydrogen atom, a halogen atom, a R, OR, OR'O, OSO₂CF₃, OCOR, SR, NR₂ or PR₂ group, wherein R is a linear or branched, saturated or unsaturated C1-C20 alkyl, C3-C20 cycloalkyl, C6-C20 aryl, C7-C20 alkylaryl or C7-C20 arylalkyl radical, optionally containing heteroatoms belonging to groups 13-17 of the Periodic Table of the Elements; and R' is a C1-C20 alkylidene, C6-C20 arylidene, C7-C20 alkylarylidene, or C7-C20 arylalkylidene radical; preferably X is a hydrogen atom, a halogen atom, a OR'O or an R group; more preferably X is chlorine or methyl;
R¹, R², R⁵, R⁶, R⁷, R⁸ and R⁹, equal to or different from each other, are hydrogen atoms, or linear or branched, saturated or unsaturated C1-C20 alkyl, C3-C20 cycloalkyl, C6-C20 aryl, C7-C20 alkylaryl or C7-C20 arylalkyl radicals, optionally containing heteroatoms belonging to groups 13-17 of the Periodic Table of the Elements; or R⁵ and R⁶, and/or R⁸ and R⁹ can optionally form a saturated or unsaturated, 5 or 6 membered rings, wherein said ring optionally bears C1-C20 alkyl radicals as substituents; with the proviso that at least one of R⁶ or R⁷ is a linear or branched, saturated or unsaturated C1-C20 alkyl radical, optionally containing heteroatoms belonging to groups 13-17 of the Periodic Table of the Elements; preferably a C1-C10 alkyl radical;
preferably R¹, R², are the same and are C1-C10 alkyl radicals optionally containing one or more silicon atoms; more preferably R¹ and R² are methyl radicals;
R⁸ and R⁹, equal to or different from each other, are preferably C1-C10 alkyl or C6-C20 aryl radicals; more preferably they are methyl radicals;
R⁵ is preferably a hydrogen atom or a methyl radical; or can be joined with R⁶ to form a saturated or unsaturated, 5 or 6 membered rings, said ring can bear C1-C20 alkyl radicals as substituents;
R⁶ is preferably a hydrogen atom or a methyl, ethyl or isopropyl radical; or R⁶ can be joined with R⁵ to form a saturated or unsaturated, 5 or 6 membered rings as described above;
R⁷ is preferably a linear or branched, saturated or unsaturated C1-C20 alkyl radical, optionally containing heteroatoms belonging to groups 13-17 of the Periodic Table of the Elements; preferably a C1-C10 alkyl radical; more preferably R⁷ is a methyl or ethyl radical; otherwise when R⁶ is different from a hydrogen atom, R⁷ is preferably a hydrogen atom;
R³ and R⁴, equal to or different from each other, are linear or branched, saturated or unsaturated C1-C20 alkyl radicals, optionally containing heteroatoms belonging to groups 13-17 of the Periodic Table of the Elements; preferably R³ and R⁴ equal to or different from each other are C1-C10 alkyl radicals; more preferably R³ is a methyl, or ethyl radical; and R⁴ is a methyl, ethyl or isopropyl radical;
The compound of formula (I) wherein:
   M, X, R¹, R², R⁵, R⁶, R⁸ and R⁹ are as described above;
   R⁴ and R⁷ are methyl radicals;
   R³ is a linear or branched, saturated or unsaturated C1-C20 alkyl radical, optionally containing heteroatoms belonging to groups 13-17 of the Periodic Table of the Elements; preferably R³ is a C1-C10 alkyl radical; more preferably R³ is a methyl, or ethyl radical, are preferred.

Alumoxanes used as component (2) can be obtained by reacting water with an organo-aluminum compound of formula HⱼAlU₃₋ⱼ or HⱼAl₂U₆₋ⱼ, where U substituents, same or different, are hydrogen atoms, halogen atoms, C1-C20 alkyl, C3-C20 cycloalkyl, C6-C20 aryl, C7-C20-alkylaryl or C7-C20 arylalkyl radical, optionally containing silicon or germanium atoms, with the proviso that at least one U is different from halogen, and j ranges from 0 to 1, being also a non-integer number. In this reaction the molar ratio Al/water is preferably comprised between about 1:1 and about 100:1. The molar ratio between aluminum and the metal of the metallocene generally is comprised between about 10:1 and about 20,000:1, and more preferably between about 100:1 and about 5000: 1.

Examples of suitable alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns. Non-limiting examples of aluminum compounds according to WO 99/21899 and WO01/21674 are: tris(2,3,3 trimethyl-butyl)aluminum, tris(2,3 dimethyl-hexyl)aluminum, tris(2,3 dimethyl-butyl)aluminum, tris(2,3 dimethyl-pentyl)aluminum, tris(2,3 dimethyl-heptyl)aluminum, tris(2 methyl-3-ethyl-pentyl)aluminum, tris(2 methyl-3-ethyl-hexyl)aluminum, tris(2 methyl-3-ethyl-heptyl)aluminum, tris(2 methyl-3-propyl-hexyl)aluminum, tris(2 ethyl-3-methyl-butyl)aluminum, tris(2 ethyl-3-methyl-pentyl)aluminum, tris(2,3 diethyl-pentyl)aluminum, tris(2 propyl-3-methylbutyl)aluminum, tris(2 isopropyl-3-methyl-butyl)aluminum, tris(2 isobutyl-3-methylpentyl)aluminum, tris(2,3,3 trimethyl-pentyl)aluminum, tris(2,3,3 trimethyl-hexyl)aluminum, tris(2 ethyl-3,3-dimethyl-butyl)aluminum, tris(2 ethyl-3,3-dimethyl-pentyl)aluminum, tris(2 isopropyl-3,3-dimethyl-butyl)aluminum, tris(2 trimethylsilyl-propyl)aluminum, tris(2 methyl-3-phenyl-butyl)aluminum, tris(2 ethyl-3-phenyl-butyl)aluminum, tris(2,3 dimethyl-3-phenylbutyl)aluminum, tris(2-phenyl-propyl)aluminum, tris[2-(4-fluoro-phenyl)-propyl]aluminum, tris[2-(4-chloro-phenyl)-propyl]aluminum, tris[2-(3-isopropyl-phenyl)-propyl]aluminum, tris(2-phenyl-butyl)aluminum, tris(3 methyl-2-phenyl-butyl)aluminum, tris(2-phenyl-pentyl)aluminum, tris[2-(pentafluorophenyl)-propyl]aluminum, tris[2,2-diphenyl-ethyl]aluminum and tris[2-phenyl-2-methyl-propyl]aluminum, as well as the corresponding compounds wherein one of the hydrocarbyl groups is replaced with a hydrogen atom, and those wherein one or two of the hydrocarbyl groups are replaced with an isobutyl group.

Amongst the above aluminum compounds, trimethylaluminum (TMA), triisobutylaluminum (TIBAL), tris(2,4,4-trimethyl-pentyl)aluminum (TIOA), tris(2,3-dimethylbutyl)aluminum (TDMBA) and tris(2,3,3-trimethylbutyl)aluminum (TTMBA) are preferred.

Non-limiting examples of compounds able to form an alkylmetallocene cation are compounds of formula D+E-, wherein D+ is a Brønsted acid, able to donate a proton and to react irreversibly with a substituent X of the metallocene of formula (I) and E- is a compatible anion, which is able to stabilize the active catalytic species originating from the reaction of the two compounds, and which is sufficiently labile to be able to be removed by an olefinic monomer. Preferably, the anion E- comprises of one or more boron atoms. More preferably, the anion E- is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred examples of these compounds are described in WO91/02012. Moreover, compounds of the formula BAr₃ can conveniently be used. Compounds of this type are described, for example, in WO92/00333.

Other examples of compounds able to form an alkylmetallocene cation are compounds of formula BAr₃P wherein P is a substituted or unsubstituted pyrrol radicals.. These compounds are described in WO01/62764. Other examples of cocatalyst can be found in EP-A-0 775 707 and DE 19917985. Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula D+E- are:
Triethylammoniumtetra(phenyl)borate,
Trimethylammoniumtetra(tolyl)borate,
Tributylammoniumtetra(tolyl)borate,
Tributylammoniumtetra(pentafluorophenyl)borate,
Tripropylammoniumtetra(dimethylphenyl)borate,
Tributylammoniumtetra(trifluoromethylphenyl)borate,
Tributylammoniumtetra(4 fluorophenyl)borate,
N,N Dimethylaniliniumtetra(phenyl)borate,
N,N Dimethylaniliniumtetrakis(pentafluorophenyl)boratee,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(phenyl)aluminate,
Ferroceniumtetrakis(pentafluorophenyl)borate,
N,N Dimethylaniliniumtetrakis(pentafluorophenyl)borate.

Organic aluminum compounds used as compound (3) are those of formula HⱼAlU₃₋ⱼ or HⱼAl₂U₆₋ⱼ described above. The catalyst are optionally supported on an inert carrier. This is achieved by depositing the metallocene compound (1) or the product of the reaction thereof with the component (2), or the component (2) and then the metallocene compound (1) on an inert support such as, for example, silica, alumina, Al-Si, Al-Mg mixed oxides, magnesium halides, styrene/divinylbenzene copolymers, polyethylene or polypropylene. The supportation process is carried out in an inert solvent such as hydrocarbon for example toluene, hexane, pentane or propane and at a temperature ranging from 0°C to 100°C, preferably the process is carried out at a temperature ranging from 25°C to 90°C or the process is carried out at 25°C temperature.

A suitable class of supports which can be used is that constituted by porous organic supports functionalized with groups having active hydrogen atoms. Particularly suitable are those in which the organic support is a partially crosslinked styrene polymer. Supports of this type are described in European application EP-A-0 633 272. Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The process for the polymerization of butene-1 with ethylene and optionally a further comonomer is carried out in the liquid phase, optionally in the presence of an inert hydrocarbon solvent, i.e. in slurry, or in the gas phase. The hydrocarbon solvent can either be aromatic, such as toluene, or aliphatic such as propane, hexane, heptane, isobutane or cyclohexane. The polymerization temperature ranges preferably from 10°C to 200°C, more preferably from 40° to 90°C, more preferably from 50°C to 80°C. The polymerization pressure is preferably comprised between 0,5 and 100 bar.

The lower the polymerization temperature, the higher are the resulting molecular weights of the polymers obtained.

In one embodiment, the polybutene component (II) consists of the butene-1 copolymer as described above.

In one embodiment, when exiting the reactor, the butene-1 copolymer is preferably melt mixed with up to and including 15% by weight, like from 0.1 to 15% by weight, of at least one propylene polymer (a) selected from the group consisting of propylene homopolymers, propylene copolymers with from 0.1 to 10.0% by weight, based on the weight of the propylene polymer, of at least one comonomer of formula CH₂=CHR, where R is H or a linear or branched C2-C8 alkyl, and combinations thereof, preferably ethylene.

Accordingly, in a preferred embodiment the polybutene component (II) is a composition comprising, based on the weight of the polybutene component (II), from 99.9% to 85.0% by weight of a butene-1 copolymer as described above and from 0.1% to 15% by weight a propylene polymer (a) selected from the group consisting of propylene homopolymers, propylene copolymers with from 0.1% to 10.0% by weight, based on the weight of the propylene polymer, of at least one comonomer of formula CH₂=CHR, where R is H or a linear or branched C2-C8 alkyl, preferably ethylene. The propylene polymer (a) preferably has a MFR value lower than 10 g/10 min, more preferably ranging from 0.01 to 10 g/10 min., measured at 230°C with a load of 2.16 kg according to the method ISO 1133 and a xylene soluble fraction at 25°C equal to or lower than 10% by weight, preferably ranging from 0.1% to 10% by weight, based on the weight of the propylene polymer (a).

In some embodiments, the polyolefin composition of the present disclosure further comprises at least one additive (III) selected from the group consisting of fillers, pigments, nucleating agents, extension oils, flame retardants (e. g. aluminum trihydrate), UV resistants (e. g. titanium dioxide), UV stabilizers, lubricants (e. g., oleamide), antiblocking agents, waxes, coupling agents for fillers, and combinations thereof, the additives (III) being of the type used in the polymer compounding art.

Preferably, the polyolefin composition comprises up to and including 50% by weight, such as from 0.01 to 50% by weight, more preferably from 0.5 to 30% by weight, of the at least one additive (III), wherein the amount of the additive (III) is based on the total weight of the polyolefin composition comprising the additive (III), the total weight being 100.

The polyolefin composition is prepared by melt-mixing the component (I), (II) and optionally (III) in a conventional melt-blending equipment, eg. an extruder. The melt-mixing process conditions are not critical *per sè*, provided that intimate mixing of the component is secured.

The polyolefin composition of the present disclosure is endowed with a favorable balance of flexibility, elongation and stress at break, in combination with improved softness and are particularly suitable to obtain thin-layered shaped articles.

Accordingly, a further object of the present disclosure is a shaped article comprising or consisting of the polyolefin composition as described above. In a preferred embodiment, the shaped article is a film or sheet.

In some embodiments, the shaped article is a film having thickness ranging from 1000 to 2000 µm, preferably from 1200 to 1800 µm.

In some embodiments, the shaped article is a film or sheet comprising or consisting of a layer X and at least one layer Y adhered to at least one surface of the layer X, wherein the layer X comprises or consists of the polyolefin composition as described above and the layer Y comprises or consists of a plastic material selected from the group consisting of propylene homopolymers, propylene copolymers, polyethylene, polyethylene terephthalate and combinations thereof.

In one embodiment, the layer Y is a woven or a non-woven fabric.

Films and sheets are obtainable by extrusion, calendering or co-extrusion.

In a preferred embodiment, the shaped article is film or sheet for use as single-ply roofing sheet or membrane.

In one embodiment, the shaped article is a film or sheet for use as geomembrane.

The features describing the subject matter of the present disclosure are not inextricably linked to each other. As a consequence, a certain level of preference of one feature does not necessarily involve the same level of preference of the remaining features. Furthermore, it forms part of the present disclosure any combination of parametric ranges and/or features, even though not explicitly described.

### EXAMPLES

The following examples are illustrative only, and are not intended to limit the scope of the disclosure in any manner whatsoever.

### CHARACTERIZATION METHODS

The following methods are used to determine the properties indicated in the description, claims and examples.

**Melt Flow Rate:** Determined according to the method ISO 1133 (230°C, 2.16kg).

**Solubility in xylene at 25°C:** 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. XS(tot) and XS_{A} values are experimentally determined. The fraction of component (B) soluble in xylene at 25°C (XS_{B}) can be calculated from the formula: $XS = W \left(A\right) \times \left({XS}_{A}\right) + W \left(B\right) \times \left({XS}_{B}\right)$ wherein W(A) and W(B) are the relative amounts of components (A) and (B), respectively, and W(A)+ W(B)=1.

**Intrinsic viscosity of the xylene soluble fraction:** to calculate the value of the intrinsic viscosity IV, the flow time of a polymer solution is compared with the flow time of the solvent (THN). A glass capillary viscometer of Ubbelohde type is used. The oven temperature is adjusted to 135°C. Before starting the measurement of the solvent flow time *t0* the temperature must be stable (135° ± 0.2°C). Sample meniscus detection for the viscometer is performed by a photoelectric device. Sample preparation: 100 ml of the filtered solution (S1) is poured in a beaker and 200 ml of acetone are added under vigorous stirring. Precipitation of insoluble fraction must be complete as evidenced by a clear solid-solution separation. The suspension is filtered on a weighed metallic screen (200 mesh), the beaker is rinsed and the precipitate is washed with acetone so that the o-xylene is completely removed. The precipitate is dried in a vacuum oven at 70°C until a constant weight is reached. 0.05g of precipitate are weighted and dissolved in 50ml of tetrahydronaphthalene (THN) at a temperature of 135°C. The efflux time t of the sample solution is measured and converted into a value of intrinsic viscosity [η] using Huggins' equation (Huggins, M.L., J. Am. Chem. Soc. 1942, 64, 11, 2716-2718) and the following data:
- concentration (g/dl) of the sample;
- the density of the solvent at a temperature of 135°C;
- the flow time t0 of the solvent at a temperature of 135°C on the same viscometer.
One single polymer solution is used to determine [η].

**Comonomer content:** ¹³C NMR spectra are acquired on a Bruker AV-600 spectrometer equipped with cryoprobe, operating in the Fourier transform mode at 120°C. The samples are dissolved in 1,1,2,2-tetrachloroethane-d2 at 120°C with a 8 % wt/v concentration. Each spectrum is acquired with a 90° pulse, and 15 seconds of delay between pulses and CPD to remove 1H-13C coupling. The spectrometer is operated at 160.91 MHz. The peak of the Sδδ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) is used as an internal reference at 29.9 ppm. 512 transients are stored in 32K data points using a spectral window of 9000 Hz.

Propylene copolymers: The assignments of the spectra, the evaluation of triad distribution and the composition are made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

| | | |
|---|---|---|
| PPP = 100 T_{ββ}/S | PPE = 100 T_{βδ}/S | EPE = 100 T_{δδ}/S |
| PEP = 100 S_{ββ}/S | PEE= 100 S_{βδ}/S | EEE = 100 (0.25 S_{yδ}+0.5 S_{δδ})/S |

$S = {T}_{ββ} + {T}_{βδ} + {T}_{δδ} + {S}_{ββ} + {S}_{βδ} + 0.25 {S}_{γδ} + 0.5 {S}_{δδ}$ The molar content of ethylene and propylene is calculated from triads using the following equations: $E \left[mol\right] = EEE + PEE + PEP$ $\left[P\right] mol = PPP + PPE + EPE$ The weight percentage of ethylene content (E% wt) is calculated using the following equation: $E% wt = \frac{\left[E\right] mol \times MWE}{\left(\left[E\right] mol\times MWE\right) + \left(\left[P\right] mol\times MWP\right)} \times 100$ wherein
[P] mol = the molar percentage of propylene content;
MWE = molecular weights of ethylene
MWP = molecular weight of propylene.
The total ethylene content C2(tot) and the ethylene content of component (A), C2(A), are measured; the ethylene content of component (B), C2(B), is calculated using the formula: $C 2 \left(tot\right) = W \left(A\right) \times C 2 \left(A\right) + W \left(B\right) \times C 2 \left(B\right)$ wherein W(A) and W(B) are the relative amounts of components (A) and (B) (W(A)+W(B)=1).

Butene-1 copolymers: The assignments of the spectra, the evaluation of triad distribution and the composition were made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

| | | |
|---|---|---|
| BBB = 100 T_{ββ}/S | BBE = 100 T_{βδ}/S | EBE = 100 P_{δδ}/S |
| BEB = 100 S_{ββ}/S | BEE = 100 S_{αδ}/S | EEE = 100(0.25 S_{γδ} + 0.5 S_{δδ})/S |

$S = {T}_{ββ} + {T}_{βδ} + {T}_{δδ} + {S}_{ββ} + {S}_{αδ} + 0.25 {S}_{γδ} + 0.5 {S}_{δδ}$

The total amount of 1-butene and ethylene as molar percent is calculated from triad using the following relations: $\left[E\right] = EEE + BEE + BEB$ $\left[B\right] = BBB + BBE + EBE$

The weight percentage of ethylene content (E% wt) is calculated using the following equation: $E% wt = \frac{\left[E\right] mol \times MWE}{\left(\left[E\right] mol\times MWE\right) + \left(\left[B\right] mol\times MWB\right)} \times 100$ wherein
[B] mol = the molar percentage of 1-butene content;
MWE = molecular weights of ethylene
MWB = molecular weight of 1-butene.

**Molecular weight distribution:** MWD is measured by way of Gel Permeation Chromatography in 1,2,4-trichlorobenzene (TCB). Molecular weight parameters (*M̅ₙ*, *M̅_{w}*, *M̅_{z}*) and molecular weight distributions for all the samples are measured by using a GPC-IR apparatus by PolymerChar, which is equipped with a column set of four PLgel Olexis mixed-bed (Polymer Laboratories) and an IR5 infrared detector (PolymerChar). The dimensions of the columns are 300 × 7.5 mm and their particle size 13 µm. The mobile phase flow rate is kept at 1.0 ml/min. All the measurements are carried out at 150°C. Solution concentrations are 2.0 mg/ml (at 150°C) and 0.3 g/l of 2,6-diterbuthyl-*p*-chresole are added to prevent degradation. For GPC calculation, a universal calibration curve is obtained using 12 polystyrene (PS) standard samples supplied by PolymerChar (peak molecular weights ranging from 266 to 1220000). A third order polynomial fit is used for interpolate the experimental data and obtain the relevant calibration curve. Data acquisition and processing is done by using Empower 3 (Waters). The Mark-Houwink relationship is used to determine the molecular weight distribution and the relevant average molecular weights. For butene/ethylene copolymers, it is assumed for each sample that the composition is constant in the whole range of molecular weight and the K value of the Mark-Houwink relationship is calculated using a linear combination: ${K}_{EB} = {x}_{E} {K}_{PE} + {x}_{B} {K}_{PB}$ where K_{EB} is the constant of the copolymer, K_{PE} (4.06 × 10⁻⁴, dl/g) and K_{PB} (1.78 × 10⁻⁴ dl/g) are the constants of polyethylene (PE) and PB, xE and xB are the ethylene and the butene-1 weight relative amounts, with xE + xB = 1. The Mark-Houwink exponents α = 0.725 was used for all the butene/ethylene copolymers independently on their composition. For PS K_{PS} = 1.21 × 10⁻⁴ dl/g and α = 0.706 are used.

**Thermal Properties of butene-1 copolymers:** the melting points of the butene-1 polymers (TmII) is measured by Differential Scanning Calorimetry (DSC) on an Perkin Elmer DSC-7 instrument. A weighted sample (5-6 mg) obtained from the polymerization is sealed into aluminum pans and heated at 180°C with a scanning speed corresponding to 10°C/minute. The sample is kept at 180°C for 5 minutes to allow a complete melting of all the crystallites. Successively, after cooling to -20°C with a scanning speed corresponding to 10°C/minute, the peak temperature is recorded as crystallization temperature (Tc). After standing 5 minutes at -20°C, the sample is heated for a second time at 200°C with a scanning speed corresponding to 10°C/min. In this second heating run, the peak temperature, when detected, is taken as the melting temperature of the crystalline form II (TmII) and the area as global melting enthalpy (ΔHfII). The melting enthalpy after 10 days is measured on the same instrument. A weighted sample (5-10 mg) obtained from the polymerization is sealed into aluminum pans and heated at 200°C with a scanning speed corresponding to 20°C/minute. The sample is kept at 200°C for 5 minutes to allow a complete melting of all the crystallites. The sample is then stored for 10 days at 25°C temperature. After 10 days the sample is subjected to DSC: the sample is cooled to -20°C, and then heated at 200°C with a scanning speed corresponding to 10°C/min. In this heating run, the peak temperature is taken as the melting temperature (Tm) and the area as global melting enthalpy after 10 days (ΔHf).

**Flexural modulus:** Determined according to the method ISO 178:2019 on injection molded test specimens (80 x 10 x 4 mm) obtained according to the method ISO 1873-2:2007 for component (I) or on compression molded specimens for component (II).

**Tensile Modulus:** determined according to the method ISO 527-3 on 1mm-thick extruded specimens. Specimens type 2, Crosshead speed: 1 mm/min.

**Tensile stress and elongation at break:** determined according to the method ISO 527-3 on 1mm-thick extruded specimens. Specimens type: 5, Crosshead speed: 500 mm/min.

**Tear resistance:** Determined according to the method ASTM D 1004 on 1mm-thick extruded specimens. Crosshead speed: 51 mm/min; V-shaped die cut specimen.

**Shore A and D values:** Determined according to the method ISO 868 (15 sec) on 1mm-thick extruded specimens or on compression molded specimens.

**Compression set:** measured according to the method ASTM D395 at 23°C and 25% deformation on compression molded specimens.

**Preparation of extruded specimens:** the polymer in form of granules are fed via feed hoppers into a Leonard extruder (mono-screw extruder, 40 mm in diameter and 27 L/D in length) where the polymer was first melted (melt temperature 230°C), compressed, mixed and finally metered out at a throughput rate of 10 Kg/h with a metering pump (15 cc/rpm). The molten polymer leaves the flat die (width 200 mm, die lip at 0.8-0.9 mm) and is instantly cooled through a vertical three-rolls calendrer having roll-temperature of 60°C. 1mm-thick extruded sheets are obtained.

**Preparation of compression molded specimens:** 4 mm thick test specimens are prepared by compression molding according to the ISO norm 8986-2:2009. PB-1 specimens are tested after 10 days of aging at 25°C and atmospheric pressure.

### Comparative example CE1 and examples CE2-CE4

Preparation of the thermoplastic polyolefin (I): the polymerization is carried out in two gas phase reactors connected in series and equipped with devices to transfer the product from the first to the second reactor.

For the polymerization a Ziegler-Natta catalyst system is used comprising:
- a titanium-containing solid catalyst component prepared with the procedure described in EP395083, Example 3, according to which di-isobutyl phthalate was used as internal electron donor compound;
- triethylaluminum (TEAL) as co-catalyst;
- dicyclopentyl dimethoxy silane (DCPMS) as external electron donor.

The solid catalyst component is contacted with TEAL and DCPMS in a pre-contacting vessel, with a weight ratio of TEAL to the solid catalyst component of 4-5 and a weight ratio TEAL/DCPMS of 5.

The catalyst system is then subjected to pre-polymerization by maintaining it in suspension in liquid propylene at 20°C for about 30-32 minutes before introducing it into the first polymerization reactor.

Propylene copolymer (A) is produced into the first gas-phase reactor by feeding in a continuous and constant flow the pre-polymerized catalyst system, hydrogen (used as molecular weight regulator), propylene and ethylene all in gaseous phase.

The propylene copolymer (A) coming from the first reactor is discharged in a continuous flow and, after having been purged of unreacted monomers, is introduced, in a continuous flow, into the second gas-phase reactor, together with quantitatively constant flows of fresh hydrogen and ethylene, all in the gas state.

In the second reactor the propylene copolymer (B) is produced.

Polymerization conditions, molar ratio of the reactants and composition of the copolymers obtained are shown in Table 1 below.

**Table 1 - polymerization conditions.**

| **GPR1** | | |
|---|---|---|
| Temperature | °C | 55 |
| Pressure | barg | 16 |
| H₂/C₃- | mol. | 0.13 |
| C₂-/(C₂- + C₃-) | mol | 0.024 |
| **Split matrix** | **wt%** | 21 |
| Xylene solubles of A (XS_{A}) | wt% | 8 |
| MFR of A (MFR_{A}) | g/10 min. | 35 |
| C₂- content of A | wt% | 3.3 |

| **GPR2** | | |
|---|---|---|
| Temperature | °C | 55 |
| Pressure | barg | 16 |
| H₂/C₂- | mol. | 0.07 |
| C₂-/(C₂- + C₃-) | mol. | 0.17 |
| **Split** | **wt%** | 79 |
| C₂- content of B^{(*)} | wt% | 28 |
| C₂- content of (A+ B) | wt% | 23.5 |
| Xylene solubles of (A + B) (XS) | wt% | 74 |
| Intrinsic viscosity of (A+B) (XSIV) | dl/g | 3.3 |
| MFR of (A + B) | g/10 min. | 0.44 |
| Flexural modulus | MPa | 55 |

| | | |
|---|---|---|
| Notes: C2- = ethylene in gas phase (IR); C3- = propylene in gas phase (IR); split = amount of polymer produced in the concerned reactor. (*) Calculated values. | | |

The polymer particles exiting the second reactor are subjected to a steam treatment to remove the unreacted monomers and volatile compounds, and then dried.

The thus obtained polyolefin composition is mixed with the additives in a twin screw extruder Berstorff ZE 25 (length/diameter ratio of screws of 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The additives added to the polyolefin composition were:
- 0.05% by weight of Irganox^{®} 1010;
- 0.1% by weight of Irgafos^{®} 168;
- 0.05% by weight of calcium stearate.
wherein the amounts of additives are based on the total weight of the polyolefin composition containing the additives.

Irganox^{®} 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos^{®} 168 is tris(2,4-di-tert.-butylphenyl) phosphite .

A polybutene component (II) comprising, based on the weight of (II), 90% by weight of a copolymer of butene-1 with ethylene, the butene-1 copolymer having Mw/Mn of 2.2, and 10% by weight of a propylene-ethylene copolymer containing 3.2% by weight of ethylene-derived units, based on the weight of the propylene component, was used, the polybutene component (II) having the following properties:
- ethylene content of 7.9% by weight;
- flexural modulus of less than 10 MPa (ISO 178:2019, measured on compression molded specimens);
- shore A value of 60 (ISO 868, measured on compression molded specimens);
- compression set of 30% (ASTM D395, at 23°C, 25% deformation, measured on compression molded specimens).

The butene-1 copolymer has no TmII and has an enthalpy after 10 days of aging ΔHf of less than 15 J/g.

The butene-1 copolymer is prepared using the metallocene-based catalyst system C2A1 described in WO2010/069775. The polymerization was carried out in two stirred reactors connected in series, in which butene-1 constituted the liquid medium. The catalyst system C2A1 and the polymerization was carried out in continuous at a temperature of 70°C and at a pressure of 20 barg in both reactors. The butene-1 copolymer is recovered as melt from the solution, compounded with the propylene copolymer and cut in pellets. The polymerization conditions are reported in Table 2.

**Table 2 - Polymerization conditions of butene-1 copolymer**

| | | Reactor 1 | Reactor 2 |
|---|---|---|---|
| Residence time | min. | 190 | 122 |
| Catalyst feed | kg/h | 2.5 | 1.5 |
| C4-feed (total) | kg/h | 13500 | 6200 |
| C2-feed | kg/h | 394 | 250 |
| H2 feed | g/h | 40 | 23 |
| H2 bulk conc. | ppm | 160 | 160 |
| Solution density | kg/m³ | 587 | 600 |
| Polymer concentration | wt.% | 25 | 28 |
| Split between reactors | | 60 | 40 |

In a co-rotating twin screw extruder Berstorff ZE25 the thermoplastic polyolefin (I) is melt blended with the polybutene component (II). The blend is extruded under nitrogen atmosphere in the following conditions: Rotation speed of 250 rpm; Extruder output of 15 kg/hour; Melt temperature of 270 °C. The mechanical properties of the compositions are illustrated in Table 3.

**Table 3 - Compositions and mechanical properties**

| | | **CE1** | **E2** | **E3** | **E4** |
|---|---|---|---|---|---|
| HECO (I) | wt% | 100 | 90 | 85 | 80 |
| PB-1 (II) | wt% | - | 10 | 15 | 20 |
| | | | | | |
| Tensile Modulus MD | MPa | 65 | 50 | 45 | 30 |
| Stress at break MD | MPa | 14.4 | 13.6 | 16.5 | 15.8 |
| Elongation at break MD | % | 640 | 688 | 800 | 793 |
| | | | | | |
| Tensile modulus TD | MPa | 40 | 43 | 30 | 25 |
| Stress at break TD | MPa | 14.2 | 14.2 | 16.0 | 16.4 |
| Elongation at break TD | % | 690 | 726 | 920 | 900 |
| | | | | | |
| Tear Resistance MD | g | 54 | 53 | 58 | 50 |
| Tear resistance TD | g | 55 | 59 | 59 | 49 |
| | | | | | |
| Shore A | | 84 | 83 | 79 | 80 |
| Shore D | | 26 | 24 | 23 | 22 |

## Claims

1. A polyolefin composition comprising:
(I) 75-95% by weight of an thermoplastic polyolefin comprising:
(A) 18-30% by weight of a copolymer of propylene with from 1.0 to 6.0% by weight, based on the weight of (A), of at least one comonomer of formula CH₂=CHR, where R is H or a linear or branched C2-C8 alkyl, wherein the melt flow rate (MFR(A)) of the copolymer, measured according to ISO 1133 (230°C, 2.16 kg), ranges from 30 to 60 g/10min; and
(B) 70-82% by weight of a copolymer of propylene with from 20 to 35% by weight, based on the weight of (B), of at least one comonomer of formula CH₂=CHR, and optionally a diene, where R is H or a linear or branched C2-C8 alkyl,
wherein the thermoplastic polyolefin
i) comprises an amount of fraction soluble in xylene at 25°C (XS(I)) equal to or greater than 70% by weight, based on the total weight of (A)+(B);
ii) has melt flow rate (MFR(I)), measured according to ISO 1133 (230°C, 2.16 kg) from 0.2 to 15.0 g/10 min,
and wherein the amounts of (A) and (B) are based on the total weight of (A)+(B); and
(II) 5-25% by weight of a polybutene component having flexural modulus equal to or lower than 60 MPa, measured according to the method ISO 178:2019 and comprising a copolymer of butene-1 with ethylene and optionally at least one comonomer of formula CH₂=CHR¹, where R¹ is methyl or a linear or branched C3-C8 alkyl, wherein the copolymer of butene-1
iii) comprises up to and including 20% by weight of units deriving from ethylene and optionally the at least one comonomer, based on the weight of (II);
iv) has molecular weight distribution Mw/Mn equal to or lower than 3;
and wherein the amounts of (I) and (II) are based on the total weight of (I)+(II).

2. The polyolefin composition of claim 1 comprising from 80 to 90% by weight, preferably from 82 to 88% by weight, of the thermoplastic polyolefin (I) and from 10 to 20% by weight, preferably from 12 to 18% by weight, of the polybutene component (II), wherein the amounts of (I) and (II) are based on the total weight of (I)+(II).

3. The polyolefin composition of claim 1 or 2, wherein the comonomer CH₂=CHR comprised in component (A) and (B) of the thermoplastic polyolefin (I) is independently selected from the group consisting of ethylene, butene-1, hexene-1, 4-methy-pentene-1, octene-1 and combinations thereof, more preferably the comonomer is ethylene.

4. The polyolefin composition according to any one of claims 1-3, wherein the thermoplastic polyolefin (I) comprises an amount of fraction soluble in xylene at 25°C (XS(I)) ranging from 70 to 90% by weight, preferably from 70 to 80% by weight, based on the weight of the thermoplastic polyolefin (I).

5. The polyolefin composition according to any one of claims 1-4, wherein the fraction soluble in xylene at 25°C of the thermoplastic polyolefin (I) has intrinsic viscosity XSIV(I) ranging from 2.5 to 4.5 dl/g, preferably from 3.0 to 3.9 dl/g.

6. The polyolefin composition according to any one of claims 1-5, wherein the thermoplastic polyolefin (I) has melt flow rate MFR(I), measured according to ISO 1133 (230°C, 2.16 kg) ranging from 0.2 to 5.0 g/10 min, preferably from 0.3 to 1.5 g/10 min., more preferably from 0.4 to 1.0 g/10 min.

7. The polyolefin composition according to any one of claims 1-6, wherein the propylene copolymer (A) has melt flow rate (MFR(A)) measured according to ISO 1133 (230°C, 2.16kg) ranging from 35 to 50 g/10 min., preferably from 40 to 50 g/10 min., more preferably from 42 to 48 g/10min.

8. The polyolefin composition according to any one of claims 1-7, wherein the copolymer of butene -1 comprised in the polybutene component (II) is a copolymer of butene-1 and ethylene comprising from 5 to 10% by weight of units deriving from ethylene, based on the weight of (II).

9. The polyolefin composition according to any one of claims 1-8, wherein the polybutene component (II) has flexural modulus equal to or lower than 60 MPa, preferably equal to or lower than 30 MPa, measured according to the method ISO 178:2019.

10. The polyolefin composition according to any one of claims 1-9, wherein the polybutene component (II) has at least one, preferably all, the following properties:
- shore A value equal to or lower than 90, preferably equal to or lower than 70, measured according to the method ISO 868; and/or
- compression set equal to or lower than 50%, measured according to the method ASTM D395 at 23°C and 25% deformation.

11. A shaped article comprising the polyolefin composition according to any one of claims 1-10.

12. The shaped article according to claim 11, wherein the article is a film or sheet.

13. The shaped article according to claim 12, comprising a layer X and at least one layer Y adhered to at least one surface of the layer X, wherein the layer X comprises the polyolefin composition as described in any one of claims 1-10 and the layer Y comprises a plastic material selected from the group consisting of propylene homopolymers, propylene copolymers, polyethylene, polyethylene terephthalate and combinations thereof.

14. The shaped article according to claim 12 or 13 for use as single-ply roofing sheet or membrane.

15. The shaped article according to claim 12 or 13, for use as geomembrane.

## Patentansprüche

1. Eine Polyolefinzusammensetzung, umfassend:
(I) 75 bis 95 Gew.-% eines thermoplastischen Polyolefins, umfassend:
(A) 18 bis 30 Gew.-% eines Copolymers aus Propylen mit 1,0 bis 6,0 Gew.-%, bezogen auf das Gewicht von (A), mindestens eines Comonomers der Formel CH₂=CHR, wobei R H oder ein lineares oder verzweigtes C2-C8-Alkyl ist, wobei die Schmelzflussrate (MFR(A)) des Copolymers, gemessen gemäß ISO 1133 (230 °C, 2,16 kg), im Bereich von 30 bis 60 g/10 min liegt; und
(B) 70 bis 82 Gew.-% eines Copolymers aus Propylen mit 20 bis 35 Gew.-%, bezogen auf das Gewicht von (B), mindestens eines Comonomers der Formel CH₂ =CHR und gegebenenfalls eines Diens, wobei R H oder ein lineares oder verzweigtes C2-C8-Alkyl ist,
wobei das thermoplastische Polyolefin
i) einen Gehalt an einer bei 25 °C in Xylol löslichen Fraktion (XS(I)) von mindestens 70 Gew.-%, bezogen auf das Gesamtgewicht von (A)+(B), umfasst;
ii) eine Schmelzflussrate (MFR(I)) gemäß ISO 1133 (230 °C, 2,16 kg) von 0,2 bis 15,0 g/10 min aufweist,
und wobei die Mengen von (A) und (B) auf das Gesamtgewicht von (A)+(B) bezogen sind; und
(II) 5 bis 25 Gew.-% einer Polybutenkomponente mit einem Biegeelastizitätsmodul von höchstens 60 MPa, gemessen gemäß ISO 178:2019, umfassend ein Copolymer aus Buten-1 mit Ethylen und gegebenenfalls mindestens einem Comonomer der Formel CH₂ =CHR¹ , wobei R¹ Methyl oder ein lineares oder verzweigtes C3-C8-Alkyl ist, wobei das Copolymer aus Buten-1
iii) bis zu einschließlich 20 Gew.-% Einheiten umfasst, die sich von Ethylen und gegebenenfalls dem mindestens einen Comonomer ableiten, bezogen auf das Gewicht von (II);
iv) eine Molekulargewichtsverteilung Mw/Mn von kleiner oder gleich 3 aufweist;
und wobei die Mengen von (I) und (II) auf das Gesamtgewicht von (I)+(II) bezogen sind.

2. Die Polyolefinzusammensetzung nach Anspruch 1, umfassend 80 bis 90 Gew.-%, vorzugsweise 82 bis 88 Gew.-%, des thermoplastischen Polyolefins (I) und 10 bis 20 Gew.-%, vorzugsweise 12 bis 18 Gew.-%, der Polybutenkomponente (II), wobei die Mengen von (I) und (II) auf das Gesamtgewicht von (I)+(II) bezogen sind.

3. Die Polyolefinzusammensetzung nach Anspruch 1 oder 2, wobei das in den Komponenten (A) und (B) des thermoplastischen Polyolefins (I) enthaltene Comonomer CH₂=CHR unabhängig voneinander aus der Gruppe ausgewählt sind, die aus Ethylen, Buten-1, Hexen-1, 4-Methylpenten-1, Octen-1 und Kombinationen davon besteht, wobei das Comonomer besonders bevorzugt Ethylen ist.

4. Polyolefinzusammensetzung nach einem der Ansprüche 1 bis 3, wobei das thermoplastische Polyolefin (I) eine Gehalt an einer bei 25 °C in Xylol löslichen Fraktion (XS(I)) von 70 bis 90 Gew.-%, vorzugsweise von 70 bis 80 Gew.-%, bezogen auf das Gewicht des thermoplastischen Polyolefins (I), umfasst.

5. Die Polyolefinzusammensetzung gemäß einem der Ansprüche 1 bis 4, wobei der bei 25 °C in Xylol lösliche Fraktion des thermoplastischen Polyolefins (I) eine intrinsische Viskosität XSIV(I) im Bereich von 2,5 bis 4,5 dl/g, vorzugsweise von 3,0 bis 3,9 dl/g, aufweist.

6. Die Polyolefinzusammensetzung gemäß einem der Ansprüche 1 bis 5, wobei das thermoplastische Polyolefin (I) eine Schmelzflussrate MFR(I) gemäß ISO 1133 (230 °C, 2,16 kg) im Bereich von 0,2 bis 5,0 g/10 min, vorzugsweise von 0,3 bis 1,5 g/10 min, noch bevorzugter von 0,4 bis 1,0 g/10 min aufweist.

7. Die Polyolefinzusammensetzung gemäß einem der Ansprüche 1 bis 6, wobei das Propylen-Copolymer (A) eine Schmelzflussrate (MFR(A)) gemäß ISO 1133 (230 °C, 2,16 kg) im Bereich von 35 bis 50 g/10 min, vorzugsweise von 40 bis 50 g/10 min, noch bevorzugter von 42 bis 48 g/10 min aufweist.

8. Die Polyolefinzusammensetzung nach einem der Ansprüche 1 bis 7, wobei das in der Polybutenkomponente (II) enthaltene Copolymer von Buten-1 ein Copolymer aus Buten-1 und Ethylen ist, das 5 bis 10 Gew.-% Einheiten umfasst, die sich von Ethylen ableiten, bezogen auf das Gewicht von (II).

9. Die Polyolefinzusammensetzung nach einem der Ansprüche 1 bis 8, wobei die Polybutenkomponente (II) einen Biegeelastizitätsmodul von kleiner oder gleich 60 MPa, vorzugsweise kleiner oder gleich 30 MPa, gemessen gemäß ISO 178:2019, aufweist.

10. Die Polyolefinzusammensetzung gemäß einem der Ansprüche 1 bis 9, wobei die Polybutenkomponente (II) mindestens eine, vorzugsweise alle der folgenden Eigenschaften aufweist:
- einen Shore-A-Wert von 90 oder weniger, vorzugsweise von 70 oder weniger, gemessen gemäß ISO 868; und/oder
- ein Druckverformungsrest von 50 % oder weniger, gemessen gemäß ASTM D395 bei 23 °C und 25 % Verformung.

11. Ein Formkörper, der die Polyolefinzusammensetzung gemäß einem der Ansprüche 1 bis 10 umfasst.

12. Der Formkörper gemäß Anspruch 11, wobei der Formkörper eine Folie oder Platte ist.

13. Der Formkörper gemäß Anspruch 12, umfassend eine Schicht X und mindestens eine Schicht Y, die an mindestens einer Oberfläche der Schicht X haftet, wobei die Schicht X die Polyolefinzusammensetzung gemäß einem der Ansprüche 1 bis 10 umfasst und die Schicht Y ein Kunststoffmaterial umfasst, das aus der Gruppe ausgewählt ist, die aus Propylenhomopolymeren, Propylencopolymeren, Polyethylen, Polyethylenterephthalat und Kombinationen davon besteht.

14. Der Formkörper gemäß Anspruch 12 oder 13 zur Verwendung als einlagige Dachbahn oder -membran.

15. Der Formkörper gemäß Anspruch 12 oder 13 zur Verwendung als Geomembran.

## Revendications

1. Une composition polyoléfinique comprenant :
(I) 75 à 95 % en poids d'une polyoléfine thermoplastique comprenant :
(A) 18 à 30 % en poids d'un copolymère de propylène avec 1,0 à 6,0 % en poids, par rapport au poids de (A), d'au moins un comonomère de formule CH₂=CHR, où R est H ou un groupe alkyle en C2-C8 linéaire ou ramifié, ledit copolymère ayant l'indice de fluidité à chaud (MFR(A)), mesuré selon la norme ISO 1133 (230 °C, 2,16 kg), est compris entre 30 et 60 g/10 min ; et
(B) 70 à 82 % en poids d'un copolymère de propylène avec 20 à 35 % en poids, par rapport au poids de (B), d'au moins un comonomère de formule CH₂=CHR, et éventuellement un diène, où R est H ou un groupe alkyle en C2-C8 linéaire ou ramifié,
dans lequel la polyoléfine thermoplastique
i) comprend une quantité de fraction soluble dans le xylène à 25 °C (XS(I)) égale ou supérieure à 70 % en poids, par rapport au poids total de (A)+(B) ;
ii) a un indice de fluidité à chaud (MFR(I)), mesuré selon la norme ISO 1133 (230 °C, 2,16 kg), compris entre 0,2 et 15,0 g/10 min,
et dans lequel les quantités de (A) et (B) sont basées sur le poids total de (A)+(B) ; et
(II) 5 à 25 % en poids d'un composant polybutène ayant un module de flexion égal ou inférieur à 60 MPa, mesuré selon la méthode ISO 178:2019, et comprenant un copolymère de butène-1 avec de l'éthylène et éventuellement au moins un comonomère de formule CH₂ =CHR¹ , où R¹ est un groupe méthyle ou un groupe alkyle en C3-C8 linéaire ou ramifié, dans lequel le copolymère de butène-1
iii) comprend jusqu'à 20 % en poids, inclus, d'unités dérivées de l'éthylène et, éventuellement, dudit au moins un comonomère, par rapport au poids de (II) ;
iv) a une distribution de poids moléculaire Mw/Mn égale ou inférieure à 3 ;
et dans lequel les quantités de (I) et (II) sont basées sur le poids total de (I)+(II).

2. La composition de polyoléfine selon la revendication 1, comprenant de 80 à 90 % en poids, de préférence de 82 à 88 % en poids, de la polyoléfine thermoplastique (I) et de 10 à 20 % en poids, de préférence de 12 à 18 % en poids, du composant polybutène (II), dans laquelle les quantités de (I) et (II) sont basées sur le poids total de (I)+(II).

3. La composition de polyoléfine selon la revendication 1 ou 2, dans laquelle le comonomère CH₂=CHR compris dans les composants (A) et (B) de la polyoléfine thermoplastique (I) est choisi indépendamment dans le groupe constitué par l'éthylène, le butène-1, l'hexène-1, le 4-méthylpentène-1, l'octène-1 et leurs combinaisons, plus préférentiellement, le comonomère étant l'éthylène.

4. Composition de polyoléfine selon l'une quelconque des revendications 1 à 3, dans laquelle la polyoléfine thermoplastique (I) comprend une quantité de fraction soluble dans le xylène à 25 °C (XS(I)) comprise entre 70 et 90 % en poids, de préférence entre 70 et 80 % en poids, par rapport au poids de la polyoléfine thermoplastique (I).

5. Composition de polyoléfine selon l'une quelconque des revendications 1 à 4, dans laquelle la fraction soluble dans le xylène à 25 °C de la polyoléfine thermoplastique (I) a une viscosité intrinsèque XSIV(I) comprise entre 2,5 et 4,5 dl/g, de préférence entre 3,0 et 3,9 dl/g.

6. Composition de polyoléfine selon l'une quelconque des revendications 1 à 5, dans laquelle la polyoléfine thermoplastique (I) a un indice de fluidité à chaud MFR(I), mesuré selon la norme ISO 1133 (230 °C, 2,16 kg) compris entre 0,2 et 5,0 g/10 min, de préférence entre 0,3 et 1,5 g/10 min, et plus préférentiellement, entre 0,4 et 1,0 g/10 min.

7. Composition de polyoléfine selon l'une quelconque des revendications 1 à 6, dans laquelle le copolymère de propylène (A) a un indice de fluidité à chaud (MFR(A)), mesuré selon la norme ISO 1133 (230 °C, 2,16 kg) compris entre 35 et 50 g/10 min, de préférence entre 40 et 50 g/10 min, plus préférentiellement entre 42 et 48 g/10 min.

8. Composition de polyoléfine selon l'une quelconque des revendications 1 à 7, dans laquelle le copolymère de butène-1 compris dans le composant polybutène (II) est un copolymère de butène-1 et d'éthylène comprenant de 5 à 10 % en poids d'unités dérivées de l'éthylène, par rapport au poids de (II).

9. Composition de polyoléfine selon l'une quelconque des revendications 1 à 8, dans laquelle le composant polybutène (II) a un module de flexion égal ou inférieur à 60 MPa, de préférence égal ou inférieur à 30 MPa, mesuré selon la méthode ISO 178:2019.

10. Composition polyoléfinique selon l'une quelconque des revendications 1 à 9, dans laquelle le composant polybutène (II) présente au moins une, et de préférence la totalité, les propriétés suivantes :
- une valeur Shore A égale ou inférieure à 90, de préférence égale ou inférieure à 70, mesurée selon la méthode ISO 868 ; et/ou
- une déformation rémanente après compression égale ou inférieure à 50 %, mesurée selon la méthode ASTM D395 à 23 °C et 25 % de déformation.

11. Article mis en forme comprenant la composition de polyoléfine selon l'une quelconque des revendications 1 à 10.

12. Article mis en forme selon la revendication 11, dans lequel l'article est un film ou une feuille.

13. Article mis en forme selon la revendication 12, comprenant une couche X et au moins une couche Y adhérant à au moins une surface de la couche X, dans lequel la couche X comprend la composition de polyoléfine telle que décrite dans l'une quelconque des revendications 1 à 10 et la couche Y comprend une matière plastique choisie dans le groupe constitué par les homopolymères de propylène, les copolymères de propylène, le polyéthylène, le polyéthylène téréphtalate et leurs combinaisons.

14. Article mis en forme selon la revendication 12 ou 13 destiné à être utilisé comme feuille ou membrane de couverture monocouche.

15. Article mis en forme selon la revendication 12 ou 13 destiné à être utilisé comme géomembrane.
